# EUROPÄISCHE PATENTANMELDUNG

(11) **EP 3 822 834 A1**
(43) Veröffentlichungstag der Anmeldung: **19.05.2021**
(21) Anmeldenummer: 20205370.8
(22) Anmeldetag: 03.11.2020
(51) Int. Cl.: G06F 21/44, H04L 29/06, H04W 12/00

(54) **VERFAHREN ZUR SICHEREN INBETRIEBNAHME EINES GERÄTS**

(30) Priorität: 14.11.2019 DE 102019130794
(71) Anmelder: ABB Schweiz AG, 5400 Baden (CH)
(72) Erfinder: Winnewisser, Christian, 69115 Heidelberg (DE)
(74) Vertreter: Wesch, Arno

(57) **Zusammenfassung**

Ein Verfahren zur sicheren Inbetriebnahme eines Geräts (1), nämlich eines KNX (Marke)-Secure-Geräts, insbesondere eines Geräts (1) der Gebäudetechnik, das unter Verwendung eines Gerätezertifikats (2) und/ oder mindestens eines Schlüssels, welches bzw. welcher in eine Konfigurationssoftware (6) eingegeben wird, in Betrieb genommen wird, ist im Hinblick auf die Aufgabe, die Handhabung und Verwaltung von Gerätezertifikaten und von erzeugten Schlüsseln zu erweitern und deren Eingabe in oder deren Übertragung an eine Konfigurationssoftware zu erleichtern, dadurch gekennzeichnet, dass ein vom Gerät (1) physisch oder körperlich unabhängiges Mobilgerät (3) verwendet wird, auf welchem das Gerätezertifikat (2) und/ oder der Schlüssel gespeichert ist, wobei das Gerätezertifikat (2) und/ oder der Schlüssel vom Mobilgerät (3) angezeigt oder ausgegeben wird und wobei das Gerätezertifikat (2) und/ oder der Schlüssel an die Konfigurationssoftware (6) zum Inbetriebnehmen des Geräts (1) übertragen oder in diese eingegeben wird.

## Beschreibung

Die Erfindung betrifft ein Verfahren zur sicheren Inbetriebnahme eines Geräts, nämlich eines KNX (Marke)-Secure-Geräts, insbesondere eines KNX (Marke)-Secure-Geräts der Gebäudetechnik, das unter Verwendung eines Gerätezertifikats und/ oder mindestens eines Schlüssels, welches bzw. welcher in eine Konfigurationssoftware eingegeben wird, in Betrieb genommen wird.

In der Gebäudetechnik werden verschiedene KNX (Marke)-Secure-Geräte verwendet, beispielsweise zur Steuerung von Leuchten, dem Klima, von Schaltern und von Rollläden. Weiter ist aus der Bustechnologie KNX (Marke) als ein Feldbus zur Gebäudeautomation bekannt geworden. KNX (Marke)-Secure-Geräte können KNX (Marke)-Telegramme verschlüsseln und entschlüsseln.

Vor diesem Hintergrund existieren für die KNX (Marke)-Secure-Geräte sogenannte Gerätezertifikate. Ein Gerätezertifikat besteht aus dem gerätespezifischen Herstellerschlüssel oder Fabrikschlüssel, dem sogenannten FDSK (Factory Default Setup Key), und einer Seriennummer, nämlich einer KNX (Marke)-Seriennummer. Der Herstellerschlüssel ist in der Regel eine Nummer. Das Gerätezertifikat liegt gewöhnlich als String oder als Code, insbesondere als QR-Code auf dem jeweiligen Gerät physisch vor und kann abgetippt oder eingescannt werden.

Die KNX (Marke)-Secure-Geräte werden unter Verwendung des Gerätezertifikats in Betrieb genommen. Wie bereits erwähnt kann ein Gerätezertifikat bisher entweder durch eine Tastatur, also mittels manueller Eingabe, durch einen Scanner, insbesondere einen Hand Scanner, oder über eine Webcam an eine Konfigurationssoftware übertragen werden. Ein Scanvorgang und eine Kamera werden direkt von der Konfigurationssoftware gesteuert. Hierbei stellt die Konfigurationssoftware spezielle Eingabefenster zur Verfügung. Die Eingabe des Gerätezertifikats in die Konfigurationssoftware ist an diese selbst gebunden.

In der Gebäudetechnik können mehrere der genannten KNX (Marke)-Secure-Geräte, die an verschiedenen Positionen angeordnet und sogar bereits verbaut sind, mittels der Konfigurationssoftware, insbesondere der ETS ("Engineering Tool Software") in Betrieb genommen werden.

Die Konfigurationssoftware fordert bei der Inbetriebnahme für jedes Gerät insbesondere ein individuelles Gerätezertifikat an. Die Konfigurationssoftware erstellt zu jedem Gerät mindestens einen oder mehrere Schlüssel, nämlich Nummern. Insbesondere erstellt die Konfigurationssoftware einen bestimmten Schlüssel, nämlich den sogenannten Tool Key.

Wenn allerdings das Gerätezertifikat eines KNX (Marke)-Secure-Geräts, das in Betrieb genommen werden soll, nicht an der Stelle verfügbar ist, an der die Gerätezertifikateingabe erfolgen soll, kann das KNX (Marke)-Secure-Gerät, welches KNX (Marke)-Telegramme verschlüsselt und entschlüsselt, nicht in Betrieb genommen werden.

Dies kann insbesondere damit einhergehen, dass diese Geräte häufig bereits in einen Verteiler oder Verteilerkasten eingebaut sind und optisch zum Teil nicht mehr zugänglich sind.

Um das Gerätezertifikat zu erfassen, müssten die Geräte unter Umständen ausgebaut und/ oder an den Ort des Betriebs der Konfigurationssoftware verbracht werden. Umgekehrt könnte auch die Hardware, auf der die Konfigurationssoftware läuft, zum Ort des Geräts verbracht werden. Hiermit ist allerdings ein erheblicher Aufwand für den Inbetriebnehmenden verbunden.

Der Erfindung liegt daher die Aufgabe zugrunde, die Handhabung und Verwaltung von Gerätezertifikaten und von erzeugten Schlüsseln zu erweitern und deren Eingabe in oder deren Übertragung an eine Konfigurationssoftware zu erleichtern.

Erfindungsgemäß wird die voranstehende Aufgabe durch ein Verfahren mit den Merkmalen des Patentanspruchs 1 gelöst. Danach wird ein vom KNX (Marke)-Secure-Gerät physisch oder körperlich unabhängiges Mobilgerät verwendet, auf welchem das Gerätezertifikat und/ oder mindestens ein Schlüssel gespeichert ist bzw. sind, wobei das Gerätezertifikat und/ oder der Schlüssel vom Mobilgerät angezeigt oder ausgegeben wird bzw. werden und wobei das Gerätezertifikat und/ oder der Schlüssel an die Konfigurationssoftware zum Inbetriebnehmen des Geräts übertragen oder in diese eingegeben wird bzw. werden.

Erfindungsgemäß werden Kopien von Gerätezertifikaten und/ oder Schlüsseln in einem Mobilgerät gespeichert. Erfindungsgemäß ist zunächst erkannt worden, dass die Gerätezertifikats- und/ oder Schlüsselverwaltung allein in der Konfigurationssoftware erfolgt. Sofern ein Konfigurationsprojekt, also eine Datei, verloren geht, oder keine aktuellen Sicherungskopien der vergebenen Gerätezertifikate und/ oder Schlüssel zur Verfügung stehen, können Geräte nicht mehr an die Kundenwünsche adaptiert werden, ohne die Geräte komplett zurückzusetzen. In diesem Fall gehen alle bisher in einem Gerät gespeicherten Konfigurationen verloren. Die gespeicherten Gerätezertifikate und/ oder Schlüssel im Mobilgerät können daher als zusätzliche Sicherheitsspeicherungen genutzt werden. Geräte, die schon in Betrieb sind, haben einen neu vergebenen bestimmten Schlüssel (Tool Key) und auch verschiedene andere Schlüssel, der bzw. die von der Konfigurationssoftware vergeben wurden. Sofern diese im Mobilgerät abgespeichert sind, können Konfigurationsprojekte relativ problemlos wieder rekonstruiert werden.

Gerätezertifikate können nicht mehr auf den Geräten verfügbar sein, beispielsweise weil sie aus Sicherheitsgründen entfernt wurden. Wenn ein sogenanntes ETS-Projekt, nämlich eine Datei, dann die einzige Quelle ist, in dem die Gerätezertifikate noch gespeichert sind, das ETS-Projekt aber auch verloren geht, ist es nicht mehr möglich, die Geräte mit KNX Secure in Betrieb zu nehmen. Dies hängt damit zusammen, dass keine Gerätezertifikate mehr verfügbar sind. Sind die Gerätezertifikate allerdings als Sicherheitsspeicherung im Mobilgerät vorhanden, können sie erneut wieder in ein neues ETS-Projekt eingefügt werden.

Gerätezertifikate und/ oder Schlüssel werden direkt im Konfigurationsprojekt gespeichert. Insbesondere in größeren Anlagen werden unter Umständen mehr als ein Konfigurationsprojekt verwendet, um Teile von Anlagen in Betrieb zu nehmen. Wenn dies geschieht, ist es schwierig, alle Gerätezertifikate und/ oder Schlüssel zu verwalten, da diese unter Umständen in verschiedenen Teilprojekten gespeichert sind. Bevorzugt verwaltet eine App oder Applikation auf dem Mobilgerät alle Gerätezertifikate und/ oder Schlüssel zentral und kann auf jedes benötigte Gerätezertifikat und/ oder jeden Schlüssel jederzeit zugreifen.

Der Transfer eines Gerätezertifikates und/ oder Schlüssels zwischen zwei Konfigurationsprojekten erfordert immer Zugriff auf ein Gerätezertifikat oder einen Schlüssel. In der App sind bevorzugt alle Gerätezertifikate und/ oder Schlüssel verfügbar, so kann auch z.B. ein komfortabler Transfer eines Gerätezertifikats oder Schlüssels zwischen zwei Installationen erfolgen, ohne dass der Inbetriebnehmende das Gerät ausbauen muss, beispielsweise wenn das Gerätezertifikat auf das Gerät aufgedruckt ist.

Bevorzugt wird die vorgenannte App oder Anwendung auf dem Mobilgerät, insbesondere einem Handy, einem Smartphone oder einem Tablet, zur Verfügung gestellt. Bevorzugt kann die App die Gerätezertifikate der Geräte einlesen, entweder per Tastatur oder per Zugriff auf eine integrierte Kamera des Mobilgeräts.

Vorteilhaft erfolgt die Übertragung oder Eingabe des Gerätezertifikats und/ oder eines Schlüssels an oder in die Konfigurationssoftware an einem Ort, der von dem Ort entfernt ist, an dem das Gerät installiert ist. Hierdurch können in einem Gebäude an mehreren unterschiedlichen Orten, insbesondere in verschiedenen Verteilerschränken oder Wohnräumen, Geräte installiert sein, und die Inbetriebnahme kann in einem Serverraum oder Technikraum erfolgen.

Vorteilhaft steht das Gerätezertifikat auf dem Gerät für den Inbetriebnehmenden in gedruckter Form zur Verfügung. So kann das Gerätezertifikat direkt von einem Gerät abgelesen werden, bevor dieses verbaut wird und nur noch schwer zugänglich ist.

Vorteilhaft werden die eingelesenen oder eingegebenen Gerätezertifikate und/ oder Schlüssel direkt bei dem Einlesen oder der Eingabe sortiert, wahlweise durch eine Zuordnung zu einem Projekt, einer Installation, einem Installationsort, und/ oder einem Kunden. Diese Zuordnung erfolgt bevorzugt durch Wisch-Gesten auf dem Mobilgerät, insbesondere einem Handy, Smartphone oder Tablet, oder durch vorhergehende Einstellungen, die dann für eine definierte Anzahl an Einlese- oder Eingabevorgängen gültig sind.

Auch eine zusätzliche Verwendung von integrierten Hardwarekomponenten des Mobilgeräts, insbesondere GPS, ist denkbar um weitere nützliche Informationen, wie beispielsweise den Installationsort eines Geräts, zu ermitteln.

Weiter vorteilhaft wird das Gerätezertifikat und/ oder ein Schlüssel nach dem Einlesen oder der Eingabe im Mobilgerät digital gespeichert und auf dem Mobilgerät wieder abgerufen. Dabei wird der Bildschirm des Mobilgeräts verwendet, um das Gerätezertifikat in einem QR-Code anzuzeigen. Die Kodierungsart der Darstellung kann in der App selbst eingestellt werden, um die größtmögliche Kompatibilität zwischen der Konfigurationssoftware und dem Mobilgerät zu ermöglichen.

Vorteilhaft wird am Installationsort des Geräts durch den Inbetriebnehmenden unter Verwendung des Mobilgeräts das Gerätezertifikat einmalig eingelesen, wenn dieses auf das Gerät aufgedruckt oder in anderer Weise sichtbar aufgebracht ist. Die so eingelesenen Gerätezertifikate können anschließend bei der Inbetriebnahme in einem Arbeitsvorgang in die Konfigurationssoftware integriert werden. Dazu kann die App die Gerätezertifikate auch in einer Dia Show präsentieren, so dass die Konfigurationssoftware alle Gerätezertifikate direkt hintereinander einlesen kann.

Weiter vorteilhaft wird durch eine App des Mobilgeräts ein direkter Export eines Gerätezertifikats und/ oder eines Schlüssels aus der App in die Konfigurationssoftware unterstützt. Denkbar ist insoweit ein direkter Export aus der App in die Konfigurationssoftware, insbesondere über Funk oder kabelgebunden, und in eine möglicherweise herstellerspezifische Erweiterung innerhalb der Konfigurationssoftware. Die in der App gespeicherten Gerätezertifikate und/ oder Schlüssel sind exportierbar und können auch extern zur sicheren Verwahrung gespeichert werden.

Vorteilhaft wird durch eine App des Mobilgeräts ein Import eines von der Konfigurationssoftware exportierten Gerätezertifikats und/ oder eines von dieser exportierten Schlüssels unterstützt. Die App unterstützt einen Import der von der Konfigurationssoftware exportierten Gerätezertifikate und/ oder Schlüssel, damit das Mobilgerät als zusätzlicher Sicherheitsspeicher verwendet werden kann. Damit ist es möglich, die zur Inbetriebnahme benötigten Gerätezertifikate und/ oder Schlüssel zentral in einem Mobilgerät zu verwalten. Durch die abgespeicherten Schlüssel können Konfigurationsprojekte, also Dateien, in einfacher Weise rekonstruiert werden.

Als Gerät wird ein KNX (Marke) - Secure-Gerät verwendet. Konkret werden mit dem hier beschriebenen Verfahren KNX (Marke)-Secure-Geräte in Betrieb genommen. KNX (Marke)-Secure-Geräte können KNX(Marke)-Telegramme verschlüsseln und entschlüsseln.

In der Gebäudetechnik können mehrere Geräte, die an verschiedenen Positionen angeordnet sind, mittels der Konfigurationssoftware, einer sogenannten ETS ("Engineering Tool Software") in Betrieb genommen werden. Das Verfahren wird insbesondere in der Gebäudesystemtechnik oder auf dem Gebiet der Gebäudeautomation ausgeführt.

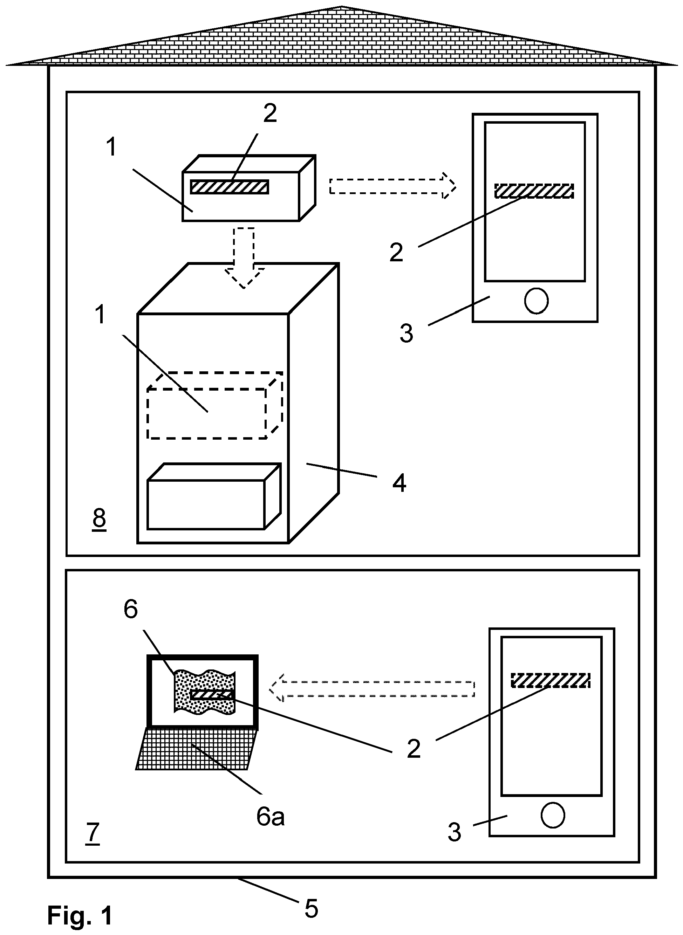

In der Zeichnung zeigt
- Fig. 1: schematisch eine Durchführung des Verfahrens zum Inbetriebnehmen eines Geräts der Gebäudetechnik, welches zur Ansteuerung von Rollläden verwendet wird.

Fig. 1 zeigt, dass ein KNX (Marke)-Secure-Gerät 1 zum Ansteuern von Rollläden ein Gerätezertifikat 2 aufweist, welches einen Herstellerschlüssel und eine KNX (Marke)-Seriennummer umfasst. Bei dem Gerät 1 handelt es sich insoweit um ein KNX (Marke)-Secure-Gerät.

Am Installationsort 8 des Geräts 1 wird durch einen nicht dargestellten Inbetriebnehmenden unter Verwendung eines Mobilgeräts 3 das Gerätezertifikat 2 einmalig eingelesen, weil dieses auf das Gerät 1 aufgedruckt ist. Konkret liegt das Gerätezertifikat 2 als String und QR-Code vor. Das Mobilgerät 3 ist als Handy oder Smartphone ausgestaltet. Bevorzugt wird eine integrierte Kamera des Mobilgeräts 3 für das Einlesen verwendet.

Das Gerätezertifikat 2 wird nach dem Einlesen oder der Eingabe im Mobilgerät 3 digital gespeichert und auf dem Mobilgerät 3 wieder abgerufen.

Darauf wird das Gerät 1 in einen Verteilerkasten 4 in einem Gebäude 5 verbaut, so dass dessen Gerätezertifikat 2 nicht mehr oder nur noch unter Aufwand optisch zugänglich ist.

In einem vom Gerät 1 entfernten und baulich abgetrennten Raum des Gebäudes 5, aber auch in einem anderen, baulich getrennten Gebäude im Rahmen einer Fernwartung, wird das Verfahren zur sicheren Inbetriebnahme des Geräts 1 der Gebäudetechnik durchgeführt. Unter Verwendung des Gerätezertifikats 2, welches in eine Konfigurationssoftware 6 eingegeben wird, wird das Gerät 1 in Betrieb genommen.

Es wird das vom Gerät 1 physisch oder körperlich unabhängige Mobilgerät 3 verwendet, auf welchem das Gerätezertifikat 2 als Kopie gespeichert ist. Das Gerätezertifikat 2 wird vom Mobilgerät 3 angezeigt und ausgegeben, wobei das Gerätezertifikat 2 an die Konfigurationssoftware 6 zum Inbetriebnehmen des Geräts 1 übertragen wird.

Die Übertragung des Gerätezertifikats 2 an die Konfigurationssoftware 6 erfolgt an einem Ort 7, der von dem Ort, nämlich dem Installationsort 8, entfernt ist, an dem das Gerät 1 installiert ist. Die Übertragung kann über ein Intranet oder das Internet erfolgen.

Die Konfigurationssoftware 6 läuft auf einer Hardware 6a. Die Hardware 6a wird zum Inbetriebnehmen des Geräts 1 bedient.

Durch eine App des Mobilgeräts 3 wird ein direkter Export des Gerätezertifikats 2 aus der App in die Konfigurationssoftware 6 unterstützt. Durch die App wird auch ein Import der von der Konfigurationssoftware 6 exportierten Geräteschlüssel unterstützt.

Eingelesene oder eingegebene Gerätezertifikate 2 werden direkt bei dem Einlesen oder der Eingabe sortiert, wahlweise durch eine Zuordnung zu einem Projekt, einer Installation, einem Installationsort 8, und/ oder einem Kunden.

In der Gebäudetechnik werden verschiedene Geräte 1 verwendet, beispielsweise zur Steuerung von Leuchten, dem Klima, von Schaltern und von Rollläden.

Das hier beschriebene Verfahren ist daher nicht auf ein Gerät 1 zum Steuern von Rollläden beschränkt. Es können auch Sensoren oder andere Geräte sicher in Betrieb genommen werden.

### Bezugszeichenliste

| | |
|---|---|
| 1 | Gerät |
| 2 | Gerätezertifikat von 1 |
| 3 | Mobilgerät |
| 4 | Verteilerkasten |
| 5 | Gebäude |
| 6 | Konfigurationssoftware |
| 6a | Hardware, auf der die Konfigurationssoftware läuft |
| 7 | Ort der Vornahme der Konfigurierung |
| 8 | Installationsort von 1 |

## Patentansprüche

1. Verfahren zur sicheren Inbetriebnahme eines Geräts (1), nämlich eines KNX (Marke)-Secure-Geräts, insbesondere eines Geräts (1) der Gebäudetechnik, das unter Verwendung eines Gerätezertifikats (2) und/ oder mindestens eines Schlüssels, welches bzw. welcher in eine Konfigurationssoftware (6) eingegeben wird, in Betrieb genommen wird,
**dadurch gekennzeichnet, dass**
ein vom Gerät (1) physisch oder körperlich unabhängiges Mobilgerät (3) verwendet wird, auf welchem das Gerätezertifikat (2) und/ oder der Schlüssel gespeichert ist, wobei das Gerätezertifikat (2) und/ oder der Schlüssel vom Mobilgerät (3) angezeigt oder ausgegeben wird und wobei das Gerätezertifikat (2) und/ oder der Schlüssel an die Konfigurationssoftware (6) zum Inbetriebnehmen des Geräts (1) übertragen oder in diese eingegeben wird.

2. Verfahren nach Anspruch 1, **dadurch gekennzeichnet, dass** die Übertragung oder Eingabe des Gerätezertifikats (2) und/ oder Schlüssels an oder in die Konfigurationssoftware (6) an einem Ort (7) erfolgt, der von dem Ort entfernt ist, an dem das Gerät (1) installiert ist.

3. Verfahren nach Anspruch 1 oder 2, **dadurch gekennzeichnet, dass** eingelesene oder eingegebene Gerätezertifikate (2) und/ oder Schlüssel direkt bei dem Einlesen oder der Eingabe sortiert werden, wahlweise durch eine Zuordnung zu einem Projekt, einer Installation, einem Installationsort (8), und/ oder einem Kunden.

4. Verfahren nach einem der voranstehenden Ansprüche, **dadurch gekennzeichnet, dass** das Gerätezertifikat (2) und/ oder der Schlüssel nach dem Einlesen oder der Eingabe im Mobilgerät (3) digital gespeichert wird und auf dem Mobilgerät (3) wieder abgerufen wird.

5. Verfahren nach einem der voranstehenden Ansprüche, **dadurch gekennzeichnet, dass** am Installationsort (8) des Geräts (1) durch den Inbetriebnehmenden unter Verwendung des Mobilgeräts (3) das Gerätezertifikat (2) einmalig eingelesen wird, wenn dieses auf das Gerät (1) aufgedruckt oder in anderer Weise sichtbar aufgebracht ist.

6. Verfahren nach einem der voranstehenden Ansprüche, **dadurch gekennzeichnet, dass** durch eine App des Mobilgeräts (3) ein direkter Export eines Gerätezertifikats (2) und/ oder eines Schlüssels aus der App in die Konfigurationssoftware (6) unterstützt wird.

7. Verfahren nach einem der voranstehenden Ansprüche, **dadurch gekennzeichnet, dass** durch eine App des Mobilgeräts (3) ein Import des von der Konfigurationssoftware (6) exportierten Gerätezertifikats (2) und/ oder eines exportierten Schlüssels unterstützt wird.

8. Verfahren nach einem der voranstehenden Ansprüche, welches in einem Gebäude (5) durchgeführt wird.
